# EUROPEAN PATENT APPLICATION

(11) **EP 3 993 523 A1**
(43) Date of publication of application: **04.05.2022**
(21) Application number: 21781369.0
(22) Date of filing: 03.02.2021
(51) Int. Cl.: H04W 56/00, H04W 92/20

(54) **BASE STATION, COMMUNICATION SYSTEM, COMMUNICATION METHOD, AND NON-TRANSITORY COMPUTER-READABLE MEDIUM**

(30) Priority: 30.03.2020 JP 2020060941
(71) Applicant: NEC Corporation, 108-8001 Tokyo (JP)
(72) Inventor: UEDA Yoshio, Tokyo 108-8001 (JP)
(74) Representative: MacDougall, Alan John Shaw
(86) International application number: PCT/JP2021/004000
(87) International publication number: WO 2021/199667

(57) **Abstract**

A first base station (121) is configured to notify a second base station (122) of frame offset information indicating a frame offset equivalent to a first difference between a start timing of a radio frame in a first base station (121) and PPS in a wireless manner or via a backhaul.

## Description

### Technical Field

The present disclosure relates to a base station, a communication system, a communication method, and a non-transitory computer-readable medium.

### Background Art

In a 5G (NR (New Radio)) system and an LTE (Long Term Evolution) system, it is necessary to establish and maintain frequency synchronization. In the 5G system and the LTE system, it is also necessary to establish and maintain phase synchronization depending on a purpose of use of TDD (Time Division Duplex) and mobile applications. However, when synchronization (hereinafter, referred to as GPS synchronization) is performed using GPS signals received from GPS (Global Positioning System), antenna cable wiring and a distribution amplifier are required, and thus a capital expenditure (CAPEX) and operation and maintenance costs will increase.

Further, compared to a WiFi (Wireless Fidelity) system, the 5G system and the LTE system are strictly required to have necessary synchronization accuracy. In a local 5G system, since interference with other radio systems (public business radio stations and satellite communications) needs to be avoided depending on applicable frequency bands, the purpose of use may be limited to factories (Society 5.0) and indoors. However, GPS signals cannot be stably received from GPS satellites in the factories and indoors, resulting in causing a problem in an introduction of a synchronization scheme using GPS.

Therefore, it is considered that a radio interface based synchronization scheme, that is, a synchronization scheme using network listening is important for 5G. The synchronization scheme using network listening is disclosed in Patent Literature 1, for example.

Patent Literature 1 discloses an example in which a small cell base station synchronizes with a macro cell base station using network listening, for example. The small cell base station receives a synchronization signal periodically transmitted by the macro cell base station using network listening. The small cell base station calculates the amount of deviation from a specified value of time from a start timing of a radio frame to a time until the synchronization signal is received, and causes a start timing of the next radio frame to be shifted by the calculated amount of deviation. Thus, the start timing of the radio frame in the small cell base station synchronizes with the start timing of the radio frame in the macro cell base station.

### Citation List

### Patent Literature

Patent Literature 1: Japanese Unexamined Patent Application Publication No. 2018-160743

### Non Patent Literature

Non Patent Literature 1: 3GPP TR36. 872 V12. 1.0 (2013-12)
Non Patent Literature 2: 3GPP TR36. 922 V15. 0.0 (2018-06)
Non Patent Literature 3: 3GPP TS38. 401 V16. 0.0 (2019-12)
Non Patent Literature 4: 3GPP TS36. 133 V16. 4.0 (2019-12)
Non Patent Literature 5: 3GPP TS38. 133 V16. 2.0 (2019-12)
Non Patent Literature 6: 3GPP TS37. 340 V16. 0.0 (2019-12)
Non Patent Literature 7: 3GPP TS23. 501 V16. 3.0 (2019-12)
Non Patent Literature 8: 3GPP TS38. 413 V16. 0.0 (2019-12)
Non Patent Literature 9: 3GPP TS38. 423 V16. 0.0 (2019-12)

### Summary of Invention

### Technical Problem

However, as in the case of local 5G and private LTE, for example, general users, instead of communication service providers, may install base stations.

Here, when a plurality of TDD base stations use the same frequency band or the same frequency, a radio frame should be started at the same timing in order to avoid the influence of interference. Therefore, the start timing of the radio frame is preset in the TDD base stations, as a shift amount from a base timing, depending on the frequency band or the frequency to be used. In other words, the shift amount from the base timing is a difference between the base timing and the start timing of the radio frame.

For this reason, when a TDD base station is installed, the base station needs to adjust the start timing of its own radio frame to a preset timing. Therefore, the base station performs phase synchronization with the other base station using network listening.

At this time, when the other base station is a TDD base station that uses the same frequency, the base station can cause the start timing of the radio frame to synchronize with the start timing of the radio frame of the other base station using network listening to adjust the start timing of the radio frame to a preset timing.

However, the other base station may be a base station (including a TDD base station and an FDD (Frequency Division Duplex) base station) that uses different frequency bands or different frequencies, or an FDD base station. In this case, the base station does not know how much the start timing of the radio frame of the other base station is shifted from the base timing.

Therefore, even when the base station performs phase synchronization with the other base station using network listening, it is not possible to adjust the start timing of the radio frame to a preset appropriate timing.

Also in Patent Literature 1, the small cell base station causes the start timing of the radio frame to synchronize with the start timing of radio frame of the macro cell base station. However, the start timing of the radio frame in the small cell base station and the start timing of the radio frame in the macro cell base station may be set at different timings. In this case, the small cell base station cannot adjust the start timing of the radio frame to a preset appropriate timing even when performing phase synchronization with the macro cell base station.

An object of the present disclosure is to contribute to the solution of the above-described problem, and to provide a base station, a communication system, a communication method, and a non-transitory computer-readable medium that enable a start timing of a radio frame to be adjusted to an appropriate timing by synchronization using network listening.

### Solution to Problem

A base station as a first base station according to an aspect includes:
at least one memory; and
at least one processor coupled to the at least one memory,
the at least one processor being configured to notify a second base station of frame offset information indicating a frame offset equivalent to a first difference between a start timing of a radio frame in the first base station and PPS (Pulse Per Second) in a wireless manner or via a backhaul.

A base station as a second base station according to another aspect includes:
at least one memory; and
at least one processor coupled to the at least one memory,
the at least one processor being configured to acquire, from a first base station, frame offset information indicating a frame offset equivalent to a first difference between a start timing of a radio frame in the first base station and PPS (Pulse Per Second) in a wireless manner or via a backhaul.

A communication system according to an aspect includes:
a first base station; and
a second base station,
the first base station being configured to notify a second base station of frame offset information indicating a frame offset equivalent to a first difference between a start timing of a radio frame in the first base station and PPS (Pulse Per Second) in a wireless manner or via a backhaul.

A communication method according to an aspect is performed by a base station as a first base station and includes:
a step of notifying a second base station of frame offset information indicating a frame offset equivalent to a first difference between a start timing of a radio frame in the first base station and PPS (Pulse Per Second) in a wireless manner or via a backhaul.

A communication method according to another aspect is performed by a base station as a second base station and includes:
a step of acquiring, from a first base station, frame offset information indicating a frame offset equivalent to a first difference between a start timing of a radio frame in the first base station and PPS (Pulse Per Second) in a wireless manner or via a backhaul.

A non-transitory computer-readable medium according to an aspect is configured to store a program that causes a computer to perform a communication method for a base station as a first base station,
the communication method including a step of notifying a second base station of frame offset information indicating a frame offset equivalent to a first difference between a start timing of a radio frame in the first base station and PPS (Pulse Per Second) in a wireless manner or via a backhaul.

A non-transitory computer-readable medium according to another aspect is configured to store a program that causes a computer to perform a communication method for a base station as a second base station,
the communication method including a step of acquiring, from a first base station, frame offset information indicating a frame offset equivalent to a first difference between a start timing of a radio frame in the first base station and PPS (Pulse Per Second) in a wireless manner or via a backhaul.

### Advantageous Effects of Invention

According to the above-described aspects, it is possible to provide a base station, a communication system, a communication method, and a non-transitory computer-readable medium that enable a start timing of a radio frame to adjust to an appropriate timing by synchronization using network listening.

### Brief Description of the Drawings

[Fig. 1] Fig. 1 is a view showing an example of an upper limit of transmission output power for each base station class defined by 3 GPP.
[Fig. 2] Fig. 2 is a view showing an example of a synchronization scheme of a network listening base.
[Fig. 3] Fig. 3 is a diagram showing an example of an architecture of a communication system according to an example embodiment.
[Fig. 4] Fig. 4 is a block diagram showing a configuration example of a base state according to the example embodiment.
[Fig. 5] Fig. 5 is a sequence diagram showing an example of a method of notifying frame offset information via a backhaul between the base stations according to the example embodiment.
[Fig. 6] Fig. 6 is a view showing an example of a list of information regarding each base station shown in Fig. 2.
[Fig. 7] Fig. 7 is a view showing an example of a correlation between a frame offset of the synchronization source base station and a frame offset of the synchronization destination base station according to the example embodiment.
[Fig. 8] Fig. 8 is a block diagram showing a hardware configuration example of the base station according to the example embodiment.
[Fig. 9] Fig. 9 is a sequence diagram showing an example of processing of a base station to be executed by a processor shown in Fig. 8.

### Description of Example Embodiments

### <Related Art>

First, a related art of the present disclosure will be described in detail before a description of an example embodiment according to the present disclosure.

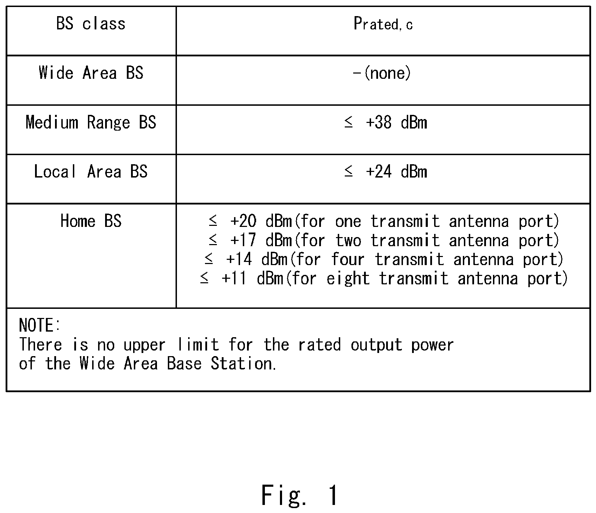

In an LTE system and an NR system, an upper limit of transmission output power of a base station is defined by 3GPP (Third Generation Partnership Project). Fig. 1 is a view showing an example of an upper limit of transmission output power for each base station class defined by 3GPP. For example, an upper limit of transmission output power of a base station of a Medium Range BS class is defined as 38 dBm, and an upper limit of transmission output power of a base station of a Local Area BS class is defined as 24 dBm. In addition, an upper limit of transmission output power of a base station of a Home BS class is defined as 11 dBm to 20 dBm depending on the number of transmit antenna ports. On the other hand, for a base station of a Wide Area BS class, an upper limit of transmission output power is not defined.

In the base station, an example of a synchronization scheme for synchronizing frequency and phase generally includes a synchronization scheme using GNSS (Global Navigation Satellite System) such as GPS. For example, in a case of using GPS, the base station performs synchronization (hereinafter, referred to as GPS synchronization) using GPS signals received from GPS satellites. However, for example, the GPS satellite does not navigate so much to the north in the northern hemisphere. For this reason, since a base station in a building looking toward a north window cannot stably receive GPS signals in the northern hemisphere, and thus cannot perform stable GPS synchronization. In order to make the base station in the building perform stable GPS synchronization, for example, a method can also be considered in which GPS signals received by a GPS antenna installed outdoors are distributed to the base station in the building. However, such a method has a problem that the GPS signals received by the GPS antenna need to be amplified and distributed, and a problem that a great cost is required for wiring of cables connecting the GPS antenna and the base station.

Further, an example of another synchronization scheme of the base station may include a synchronization scheme using a backhaul such as a TDM (Time division Multiplexing) network or SyncE (Synchronous Ethernet). The synchronization scheme using the backhaul uses an IEEE (Institute of Electrical and Electronics Engineers) 1588 v2/PTP (Precision Time Protocol) protocol, for example. However, the synchronization scheme using the backhaul is necessary to construct a new backhaul network. In order to realize frequency synchronization and phase synchronization using PTP, network devices, for example, a PTP grand master and a switch (BC (Boundary Clock)) compatible with PTP are required. As described above, the synchronization scheme using the backhaul has problems that a dedicated network and network devices are required to be introduced and a large operation and maintenance cost is required.

In the LTE, as another synchronization scheme of the base station, a radio interface based synchronization (RIBS) is suggested in Non Patent Literature 1 (3GPP TR36. 872) and Non Patent Literature 2 (3GPP TR36. 922). In the radio interface based synchronization, the base station itself (eNB (evolved Node B) or gNB) measures surrounding radio waves like a UE (User Equipment), and realizes frequency synchronization and phase synchronization using measurement results of the radio waves. In this way, that the base station itself measures the surrounding radio waves is generally called network listening, or is also called Sniffer, NMM (Network monitoring mode), or REM (Radio Environment Measurement). Hereinafter, for convenience, the radio interface based synchronization is called network listening based synchronization. Further, for convenience, the base station for providing synchronization to another base station is called a synchronization source base station, and the base station to be synchronized from the synchronization source base station is called a synchronization destination base station.

Here, Non Patent Literature 3 (3GPP TS38. 401) discloses TDD as follows.

"A configurable LTE TDD-offset of start frame shall be supported by all gNBs in synchronized TDD-unicast areas in order to achieve interoperability in coexistence scenarios."

In other words, a TDD-offset shall be set by all gNBs in synchronized TDD-unicast areas in order to guarantee interoperability in coexistence scenarios.

In 3GPP, phase difference of start timing of a radio frame should be kept within 3 microseconds between adjacent eNBs or between adjacent gNBs of a TDD system, by provisions of Non Patent Literature 4 (3GPP TS36. 133) and Non Patent Literature 5 (3GPP TS38. 133). Similarly, phase difference of start timing of a radio frame should be kept within 3 microseconds between adjacent eNBs or between adjacent gNBs of a TD-LTE system, by a provisions of Non Patent Literature 4 (3GPP TS36. 133). Further, depending on the required mobile communication technology (for example, MIMO (Multiple Input Multiple Output), transmission diversity scheme, and CA (Carrier Aggregation)), a relative time error between base stations requires accuracy of microseconds to nanoseconds or less.

Here, when a plurality of TDD base stations use the same frequency band or the same frequency, a radio frame should be started at the same timing in order to avoid the influence of interference. Therefore, the start timing of the radio frame is preset in the TDD base stations, as a shift amount from 1 PPS (Pulse Per Second), which is base timing, depending on the same frequency band or the same frequency to be used.

For this reason, generally, phase synchronization is achieved between TDD macro base stations that use the same frequency band or the same frequency. Therefore, when the TDD base station synchronizes with the TDD macro base stations, which use the same frequency band or the same frequency, at the start timing of the radio frame of the macro base stations, it can be adjusted to the preset timing.

However, the synchronization source base station may be an NR base station (including a TDD base station and an FDD base station) that uses different frequency bands or different frequencies, an NR-FDD base station, or an LTE base station, a W-CDMA (Wideband Code Division Multiple Access) base station, a CDMA base station, and a GSM (registered trademark) (global system for mobile communications) base station other than the NR base station. In this case, it is not clear how much the start timing of the synchronization source base station is shifted from the base timing.

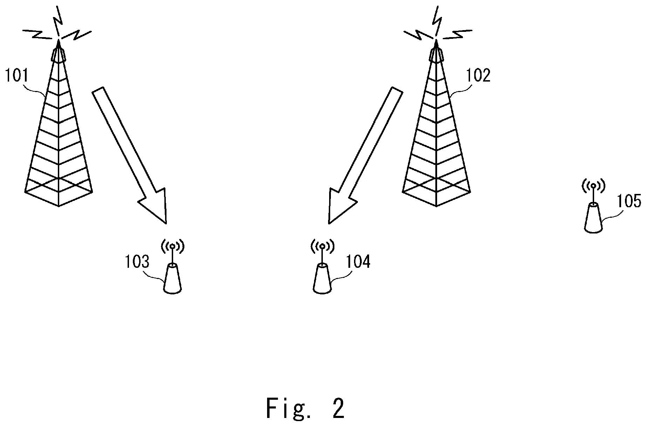

For example, it is assumed in Fig. 2 that all of the base stations 101 to 105 are TDD base stations that use the same frequency, the base stations 101 and 102 of the Wide Area BS class and the base station 105 of the Local Area BS class perform GPS synchronization, and the base stations 103 and 104 of the Local Area BS class synchronizes with the base stations 101 and 102 using network listening, respectively. In this case, the base station 103 performs phase synchronization with the base station 101 using network listening to synchronize the start timing of the radio frame of the base station with the start timing of the radio frame of the base station 101. Similarly, the base station 104 synchronizes the start timing of the radio frame of the base station 104 with the start timing of the radio frame of the base station 102. Thus, the start timing of the radio frame can be synchronized and can be adjusted to the preset timing throughout the system.

Generally, in a TDD system including TDD base stations installed in the same area using the same frequency, phase synchronization is achieved between adjacent base stations. In an FDD system including FDD base stations, however, phase synchronization is not achieved between adjacent base stations.

Therefore, in Fig. 2, when the base stations 101 and 102 are FDD base stations that use any frequency and the base stations 103 and 104 use different frequencies, phase synchronization may not be achieved between the FDD base stations 101 and 102. For this reason, when the base stations 103 and 104 are TDD base stations, the base stations 103 and 104 cannot adjust the start timing of the radio frame to the preset timing even when performing phase synchronization with the base stations 101 and 102 using network listening, respectively. As a result, the phase difference of the start timing of the radio frame cannot be guaranteed within 3 microseconds between the base stations 103 and 104.

As described above, according to the related art, when the synchronization source base station is the FDD base station, or uses a frequency band or a frequency different from that of the synchronization destination base station, the synchronization destination base station does not know how much the start timing of the radio frame of the synchronization source base station is shifted from 1 PPS of GPS. Therefore, there is a problem that the synchronization destination base station cannot adjust it to the preset appropriate timing.

### <Outline of Example Embodiment>

In an example embodiment to be described below, a first base station notifies a second base station of frame offset information indicating a frame offset equivalent to a first difference between start timing of a radio frame in the first base station and PPS, in a wireless manner or via a backhaul.

The frame offset may be defined in nanoseconds or in other units such as microseconds. Further, the PPS is a pulse signal that is output exactly at 1-second intervals, and is received from GPS satellites. Timing at which the pulse signal is output is not limited to the 1-second intervals. For example, the pulse signal may be output at 2-second intervals or 1-minute intervals. In the following description, the PPS will be described as 1 PPS (1 Pulse Per Second), but the PPS may be 2 PPS (2 Pulse per second), and the number of pulses output at 1-second intervals is not particularly limited.

Thus, the second base station can acquire the frame offset information of the first base station, and can know from the frame offset information how much the start timing of the radio frame of the first base station is shifted from 1 PPS. For this reason, when the second base station subsequently synchronizes with the first base station using network listening and detects a start timing of a radio frame of the first base station, the second base station can adjust start timing of a radio frame, based on the start timing of the radio frame of the first base station and the frame offset of the first base station. This makes it possible to adjust the start timing of the radio frame of the second base station to preset appropriate timing, which contributes to solve the problem described above. The first base station and the second base station may be adjacent to each other.

### <Example Embodiment>

An example embodiment of the present disclosure will be described below with reference to the drawings. The following description and drawings are omitted or simplified as appropriate for the sake of clarity of the description.

First, an example of an architecture of a communication system according to the present example embodiment will be described.

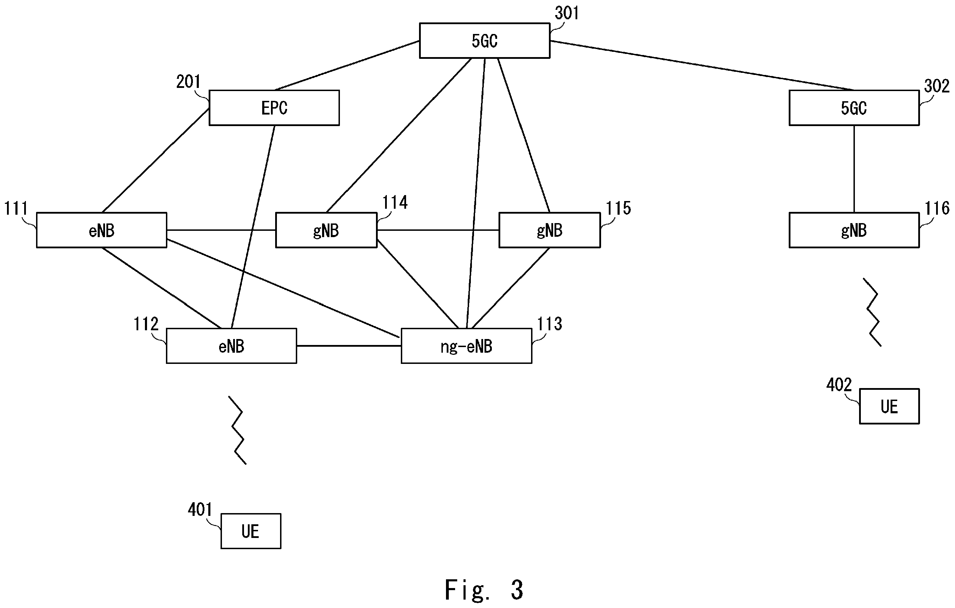

Fig. 3 is a diagram showing an example of the architecture of the communication system of the present example embodiment. Fig. 3 shows an NR/LTE communication system.

As shown in Fig. 3, the communication system according to the present example embodiment includes, for example, eNBs 111 and 112, an ng-eNB 113, gNBs 114,115, and 116, an EPC (Evolved Packet Core) 201, 5GCs (5G Core Network) 301 and 302, and UEs 401 and 402.

Each of the eNBs 111 and 112 is a base station that supports the LTE system. Each of the eNBs 111 and 112 may be divided into a CU (Central Unit), a DU (Digital Unit), and an RU (Radio Unit), or may be divided into a C-plane (Control-plane) processing unit and a U-plane (User-plane) processing unit. Further, each of the eNBs 111 and 112 may be a microminiaturized base station such as an HeNB (Home eNB).

The EPC 201 is an LTE system core network. The EPC 201 may be divided into an MME (Mobility Management Entity), an S-GW (Serving Gateway), and a P-GW (PDN Gateway).

Each of the eNBs 111 and 112 and the EPC 201 are connected by an S1 interface, and call processing signals and O&M (Operation and Maintenance) processing signals are transmitted and received therebetween.

The eNB 111 and the eNB 112 are connected to an X2 interface, each of the eNBs 111 and 112 and the ng-eNB 113 to be described below are connected by an X2 interface, call processing signals and O&M processing signals such as a handover and EN-DC (E-UTRA(Evolved Universal Terrestrial Radio Access) -NR Dual Connectivity) are transmitted and received. The EN-DC is described in detail in Non Patent Literature 6 (3GPP TS37. 340).

The ng-eNB 113 supports an NG interface with the 5GC 301, but is a base station that can be connected to each of the UEs 401 and 402 by U-plane and C-plane of the LTE (E-UTRA) system. The ng-eNB 113 may be divided into CU, DU, and RU, or may be divided into a C-plane processing unit and a U-plane processing unit. Further, the ng-eNB 113 may be a microminiaturized base station such as a Home ng-eNB.

Each of the gNBs 114, 115, and 116 is a base station that provides a wireless connection in a fifth-generation mobile communication system (5G or NR). Each of the gNBs 114, 115, and 116 may be divided into CU, DU, and RU, or may be divided into a C-plane processing unit and a U-plane processing unit. Further, each of the gNBs 114, 115, and 116 may be a microminiaturized base station such as a Home gNB.

By connection of an Xn interface, each of the gNBs 114 and 115 and the ng-eNB 113 are connected, and the gNB 114 and the gNB 115 are connected, thereby supporting a handover or NE-DC (NR-E-UTRA Dual Connectivity) and NGEN-DC (NG-RAN E-UTRA-NR Dual Connectivity). The NE-DC and the NGEN-DC are described in detail in Non Patent Literature 6 (3GPP TS37. 340).

Each of the 5GCs 301 and 302 is a core network for 5G. Each of the 5GCs 301 and 302 includes an AMF (Access and Mobility management Function) node, an SMF (Session Management Function) node, a UPF (User Plane Function) node, a PCF (Policy Control function) node, an NEF (Network Exposure Function) node, an NRF (Network Repository Function) node, and a UDM (Unified Data Management) node. These nodes are described in detail in Non Patent Literature 7 (3GPP TS23. 501).

By an NG interface, the 5GC 301 and each of the gNBs 114 and 115 are connected, the 5GC 302 and the gNB 116 are connected, and the 5GC 301 and the ng-eNB 113 are connected, thereby call processing signals and O&M processing signals are transmitted and received.

An interface connecting the 5GC 301 and the 5GC 302 is defined by an N14 interface in Non Patent Literature 7 (3GPP TS23. 501), thereby signals are transmitted and received between the 5GCs.

An interface connecting the 5GC 301 and the EPC 201 is defined by an Nx interface in Non Patent Literature 7 (3GPP TS23. 501), thereby, signals for interworking between the 5GC 301 and the EPC 201 are transmitted and received. The Nx interface may be an S10 interface or an N14 interface.

The UE 402 and the gNB 116 are connected using the NR system.

The UE 401 and the eNB 112 are connected using the LTE system.

Each of the UEs 401 and 402 may be a mobile terminal or a smartphone. In addition, each of the UEs 401 and 402 may be a wearable device or an invehicle terminal mounted on an automobile.

The above-described connection method between each of the UEs 401 and 402 and the network is an example. Each of the UEs 401 and 402 and the network may be connected by the LTE system alone or the NR system alone, may be connected by MR-DC (Multi-RAT Dual connectivity), or may be connected by DC, which is a combination of the LTE system and the NR system, for example, EN-DC, NGEN-DC, or NE-DC.

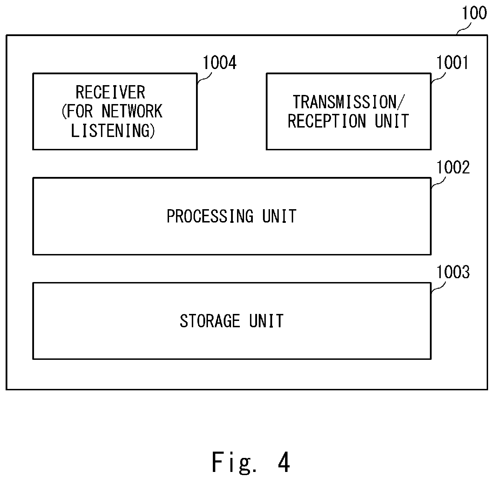

Subsequently, a configuration example of the base station 100 according to the present example embodiment will be described. Fig. 4 is a block diagram showing a configuration example of the base station 100 according to the present example embodiment. The base station 100 is a concept including the base stations 101 to 105 in Fig. 2 and eNBs 111 and 112, ng-eNB 113, and gNBs 114, 115, and 116 in Fig. 3.

As shown in Fig. 4, the base station 100 according to the present example embodiment includes a transmission/reception unit 1001, a processing unit 1002, a storage unit 1003, and a receiver 1004 for network listening.

On a wired side, the transmission/reception unit 1001 transmits and receives various signals to/from the EPC 201, the 5GCs 301 and 302, and other base stations. Further, on a wireless side, the transmission/reception unit 1001 transmits and receives various signals to/from the UEs 401 and 402.

The receiver 1004 receives radio waves sent from the surrounding base stations using network listening after tuning the radio waves at frequencies of the surrounding base stations.

The processing unit 1002 performs signal processing, for example, NGAP (NG Application Protocol) processing, XnAP (Xn Application Protocol) processing, S1AP (S1 Application Protocol) processing, and X2AP (X2 Application Protocol) processing, on the signals transmitted and received on the wired side of the transmission/reception unit 1001.

In addition, the processing unit 1002 performs signal processing, for example, RRC (Radio Resource Control) processing, SDAP (Service Data Adaptation Protocol) processing, PDCP (Packet Data Convergence Protocol) processing, RLC (Radio Link Control) processing, MAC (Medium Access Control) processing, and PHY (Physical layer) processing, on the signals transmitted and received on the wireless side of the transmission/reception unit 1001.

Further, the processing unit 1002 measures the radio waves received by the receiver 1004, and performs synchronization processing (frequency synchronization, phase synchronization) based on the measurement result of the radio waves. For example, in a situation where frame offset information is notified from the adjacent base station adjacent to the base station 100, when the base station 100 performs phase synchronization with the adjacent base station using network listening, the processing unit 1002 adjusts the start timing of the radio frame of the base station 100 based on the frame offset information of the adjacent base station. At this time, the processing unit 1002 considers a difference between the frame offset of the adjacent base station and the frame offset of the base station 100 itself (equivalent to a difference between the start timing of the radio frame should be started by the base station 100 itself and 1 PPS). Specifically, the processing unit 1002 causes the start timing of the radio frame of the base station 100 to synchronize with the start timing of the radio frame of the adjacent base station using network listening, and then causes the start timing of the radio frame of the base station 100 to be shifted by the difference.

In addition, the processing unit 1002 performs call processing such as bearer control or handover, reset processing, alarm processing, statistical information processing, and O&M processing.

The storage unit 1003 is used to store a software module group. The processing unit 1002 can perform the above-described processing by reading and executing the software module group from the storage unit 1003.

An operation of the communication system according to the present example embodiment will be described.

In Fig. 2, it is assumed that each of the base stations 101 and 102 is a base station of a Wide Area BS class and provides a service in advance with an FDD system using band 3. Here, it is assumed that the base station 101 performs GPS synchronization and the start timing of the radio frame is shifted by 2000 microseconds from 1 PPS of GPS (that is, the frame offset is 2000 microseconds). In addition, it is also assumed that the base station 102 performs GPS synchronization and completely synchronizes with 1 PPS of GPS (that is, the frame offset is 0 microsecond).

Further, it is assumed that the base station 105 is a base station of a Local Area BS class and provides a service in advance with a TDD system using band 39. Here, it is assumed that the base station 105 performs GPS synchronization and the start timing of the radio frame is shifted by 4000 microseconds from 1 PPS of GPS (that is, the frame offset is 4000 microseconds).

In addition, it is assumed that each of the base stations 103 and 104 provides a service with a TDD system using band 39. Each of the base stations 103 and 104 may be a different service provider from the base station 105.

Here, when a plurality of TDD base stations use the same frequency in the same area, it is necessary to start the radio frame at the same frame offset timing in order to avoid the influence of interference. When the frame offset shifts between adjacent TDD base stations, uplink transmission timing and downlink transmission timing shift, which may cause an interference problem.

Therefore, in the present example embodiment, the start timing of the radio frame is set in advance in the TDD base stations 103, 104, and 105 using the same band 39 by a maintenance monitoring device (O&M device) such that the radio frame is started at the same frame offset timing. For example, the frame offset is set in the band 39 to be shifted by 4000 microseconds from 1 PPS of GPS. For this reason, each of the base stations 103, 104, and 105 needs to match the start timing of the radio frame with the timing shifted by 4000 microseconds from 1 PPS of GPS.

The base station 103 detects, as an adjacent base station, the base station 101 using network listening. Therefore, the base station 103 performs phase synchronization using network listening using the base station 101 as the synchronization source base station. At this time, the base station 103 needs to shift the start timing of the radio frame by 4000 microseconds from 1 PPS.

In addition, the base station 104 detects, as an adjacent base station, the base station 102 using network listening. Therefore, the base station 104 performs phase synchronization using network listening using the base station 102 as the synchronization source base station. At this time, the base station 104 needs to shift the start timing of the radio frame by 4000 microseconds from 1 PPS.

Here, according to the related art, even when the base stations 103 and 104 detect the base stations 101 and 102 using network listening, respectively, since the base stations 101 and 102 are FDD base stations, it is not clear how much the start timing of the radio frame of each of the base stations 101 and 102 is shifted from 1 PPS of GPS. Therefore, there is the problem that each of the base stations 103 and 104 cannot adjust the start timing of the radio frame to the preset timing.

In order to contribute to the solution of the problem described above, according to the present example embodiment, the method is proposed that the adjacent base station adjacent to the base station notifies the base station of the frame offset information indicating the frame offset equivalent to the difference between the start timing of the radio frame in the adjacent base station and 1 PPS, in the wireless manner or via the backhaul.

Thus, the base station can acquire the frame offset information of the adjacent base station, and can know from the frame offset information how much the start timing of the radio frame in the adjacent base station is shifted from 1 PPS. For this reason, when the base station subsequently synchronizes with the adjacent base station using network listening and detects the start timing of the radio frame in the adjacent base station, the base station can adjust the start timing of the radio frame to the preset timing, based on the start timing of the radio frame in the adjacent base station and the frame offset of the adjacent base station.

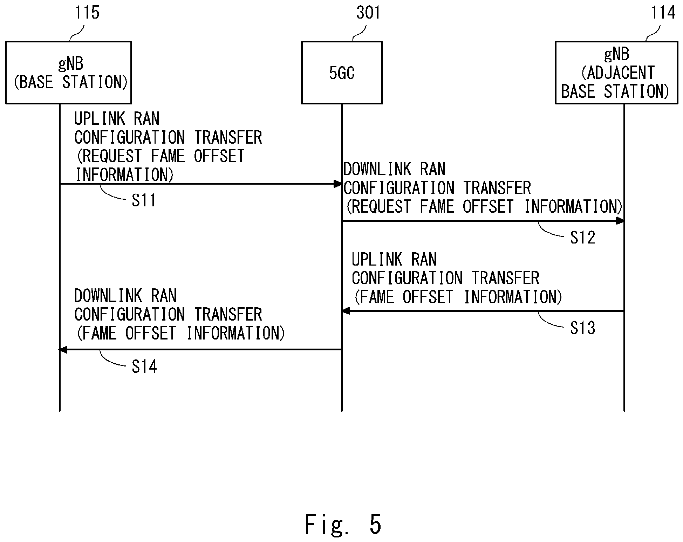

Subsequently, a description will be given with respect to an example of a method of notifying the frame offset information between the base stations according to the present example embodiment via the backhaul. Fig. 5 is a sequence diagram showing an example of a method of notifying the frame offset information between the base stations according to the present example embodiment via the backhaul. Fig. 5 shows an example in which the base station is the gNB 115 shown in Fig. 3 which is an NG RAN node (gNB or ng-eNB) and the adjacent base station is the gNB 114 shown in Fig. 3 which is an NG RAN node. In addition, Fig. 5 shows an example in which the adjacent base station notifies frame offset information of the adjacent base station using an UPLINK RAN CONFIGURATION TRANSFER message and a DOWNLINK RAN CONFIGURATION TRANSFER message of an NGAP protocol.

The gNB 115 has a function of periodically performing network listening during power-ON or during starting of a cell. Here, it is assumed that the gNB 115 detects the gNB 114 as an adjacent base station using network listening.

As shown in Fig. 5, when the gNB 114 is detected by the network listening, the gNB 115 extracts routing information including Cell-ID, PLMN (Public Land Mobile Network)-ID, and TAC (Tracking Area Code) information of the gNB 114, based on the broadcast information transmitted from the gNB 114. Then, the gNB 115 sets the routing information of the gNB 114 to a target ID of the UPLINK RAN CONFIGURATION TRANSFER message, transmits the UPLINK RAN CONFIGURATION TRANSFER message to the 5GC 301, and requests frame offset information of the gNB 114 (step S11).

The 5GC 301 transmits the DOWNLINK RAN CONFIGURATION TRANSFER message to the gNB 114 based on the routing information of the gNB 114 set to the UPLINK RAN CONFIGURATION TRANSFER message, and inquires about the frame offset information of the gNB 114 (step S12).

The gNB 114 sets the frame offset information of the gNB 114 to the UPLINK RAN CONFIGURATION TRANSFER message, and transmits the UPLINK RAN CONFIGURATION TRANSFER message to the 5GC 301 (step S13).

The 5GC 301 transmits the DOWNLINK RAN CONFIGURATION TRANSFER message to the gNB 115, and notifies the gNB 115 of the frame offset information of the gNB 114 (step S14).

The gNB 114 may notify the gNB 115 of not only the frame offset information of the gNB 114 but also the phase accuracy information indicating the phase accuracy of the gNB 114. The phase accuracy indicates how much the actual start timing of the radio frame is shifted from the timing determined by the frame offset. Further, when the phase accuracy information is notified from the plurality of adjacent base stations (gNBs adjacent to the gNB 115) including the gNB 114, the gNB 115 may select the adjacent base station having higher phase accuracy as the synchronization destination base station.

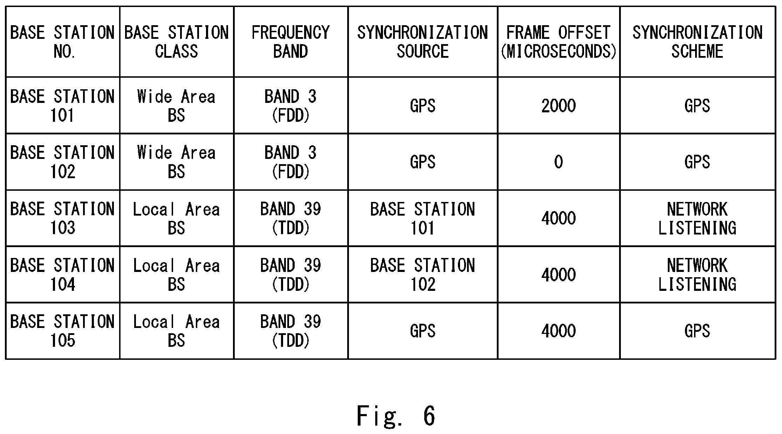

Subsequently, a description will be given with respect to an example of the frame offset information regarding each of the base stations 101 to 105 shown in Fig. 2. Fig. 6 is a view showing an example of a list of information regarding each of the base stations 101 to 105 shown in Fig. 2. Fig. 6 shows information on a base station class, a frequency band, a synchronization source, a frame offset, and a synchronization scheme for each of the base stations 101 to 105. Each of the base stations 101 to 105 stores and retains at least information regarding the own base station among the information shown in Fig. 6 in the storage unit 1003. Further, each of the base stations 101 to 105 may also acquire information regarding the adjacent base station, which is detected by the network listening, from the adjacent base station among the information shown in Fig. 6 and retain the acquired information.

The base station class is defined as a Wide Area BS, a Medium Range BS, a Local Area BS, and a Home BS.

The frequency band is a frequency band used by the base station, and includes information on whether either the TDD system or the FDD system is adopted.

The synchronization source is GPS when the synchronization scheme of the base station is GPS synchronization. On the other hand, when the synchronization scheme of the base station is network listening based synchronization, the synchronization source is a synchronization source base station.

The frame offset is the shift amount of the start timing of the radio frame in the base station from 1 PPS. In Fig. 6, the frame offset is defined in microseconds, but may be defined in other units such as nanoseconds.

For example, the base station 103 uses a network listening based synchronization scheme. The base station 103 acquires the frame offset information of the base station 101 from the base station 101 detected as the adjacent base station by the network listening, for example, using the method shown in Fig. 5. Here, since the frame offset of the base station 101 is 2000 microseconds and the frame offset of the base station 103 is 4000 microseconds, the difference between the frame offsets is 2000 (= 4000 - 2000) microseconds. Therefore, when the base station 103 performs phase synchronization with the base station 101 using network listening, the start timing of the radio frame of the base station 103 synchronizes with the start timing of the radio frame of the base station 101, and then is shifted by 2000 microseconds equivalent to the difference. As a result, the base station 103 can shift the start timing of the radio frame by 4000 microseconds from 1 PPS of GPS.

In addition, the base station 104 uses a network listening based synchronization scheme. The base station 104 acquires the frame offset information of the base station 102 from the base station 102 detected as the adjacent base station by the network listening, for example, using the method shown in Fig. 5. Here, since the frame offset of the base station 102 is 0 microseconds and the frame offset of the base station 104 is 4000 microseconds, the difference between the frame offsets is 4000 (= 4000 - 0) microseconds. Therefore, when the base station 104 performs phase synchronization with the base station 102 using network listening, the start timing of the radio frame of the base station 104 synchronizes with the start timing of the radio frame of the base station 102, and then is shifted by 4000 microseconds equivalent to the difference. As a result, the base station 104 can shift the start timing of the radio frame by 4000 microseconds from 1 PPS of GPS.

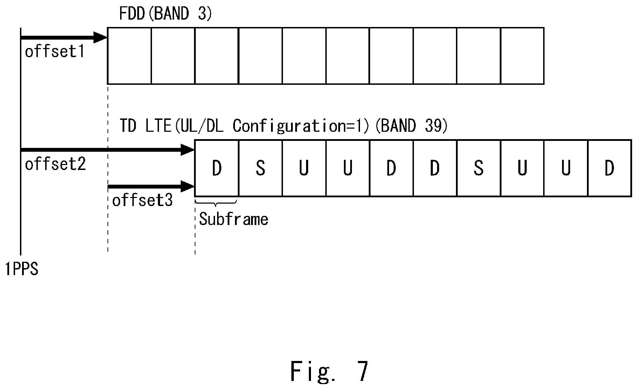

Subsequently, a description will be given with respect to an example of a correlation between a frame offset of the synchronization source base station and a frame offset of the synchronization destination base station. Fig. 7 is a view showing an example of a correlation between a frame offset of the synchronization source base station and a frame offset of the synchronization destination base station. In Fig. 7, the radio frame includes 10 subframes. Among the subframes, "U" indicates upling subframes, "D" indicates downling subframes, and "S" indicates special subframes that serve as a guard time between the upling subframe and the downling subframe.

In Fig. 7, offset 1 corresponds to a frame offset of the synchronization source base station for network listening. Offset 1 indicates that the start timing of the radio frame in the synchronization source base station is shifted by offset 1 from 1 PPS of GPS which is the base timing.

Further, offset 2 corresponds to a frame offset of the synchronization destination base station for network listening. Offset 2 indicates that the start timing of the radio frame in the synchronization destination base station is shifted by offset 2 from 1 PPS of GPS which is the base timing.

In addition, offset 3 corresponds to a difference between the frame offset of the synchronization source base station and the frame offset of the synchronization destination base station for network listening. Offset 3 indicates how much the start timing of the radio frame should be shifted after the synchronization destination base station causes the start timing of the radio frame to synchronize with the start timing of the radio frame of the synchronization source by network listening based phase synchronization.

For example, in the case of Fig. 6, the base station 101 in Fig. 2 is the synchronization source base station, and the base station 103 in Fig. 2 is the synchronization destination base station. Here, the synchronization source base station 101 is the FDD base station that uses band 3, and offset 1 equivalent to the frame offset is 2000 microseconds. On the other hand, the synchronization destination base station 103 is the TDD base station that uses band 39, and offset 2 equivalent to the frame offset is 4000 microseconds. Therefore, the synchronization destination base station 103 may cause the stat timing of the radio frame in the base station 103 to synchronize with the stat timing of the radio frame in the synchronization source base station 101 by phase synchronization using network listening, and then shift the start timing of the radio frame in the base station 103 by offset 3 (a difference between offset 2 and offset 1, that is, 2000 microseconds).

In the case of Fig. 6, the base station 102 in Fig. 2 is the synchronization source base station, and the base station 104 in Fig. 2 is the synchronization destination base station. Here, the synchronization source base station 102 is the FDD base station that uses band 3, and offset 1 equivalent to the frame offset is 0 microseconds. On the other hand, the synchronization destination base station 104 is the TDD base station that uses band 39, and offset 2 equivalent to the frame offset is 4000 microseconds. Therefore, the synchronization destination base station 104 may cause the stat timing of the radio frame in the base station 104 to synchronize with the stat timing of the radio frame in the synchronization source base station 102 by phase synchronization using network listening, and then shift the start timing of the radio frame in the base station 104 by offset 3 (a difference between offset 2 and offset 1, that is, 4000 microseconds).

As described above, according to the present example embodiment, the synchronization destination base station uses the frame offset information of the synchronization source base station acquired from the synchronization source base station when performing phase synchronization with the synchronization source base station using network listening. Therefore, the synchronization destination base station can correctly adjust the start timing of the radio frame to the preset timing even when the synchronization source base station is the FDD base station.

According to the present example embodiment as described above, the adjacent base station adjacent to the base station notifies the base station of the frame offset information indicating the frame offset equivalent to the difference between the start timing of the radio frame in the adjacent base station and 1 PPS, in the wireless manner or via the backhaul. Thus, the base station can know from the frame offset information of the adjacent base station how much the start timing of the radio frame in the adjacent base station is shifted from 1 PPS. For this reason, when the base station subsequently synchronizes with the adjacent base station using network listening and detects the start timing of the radio frame in the adjacent base station, the base station can adjust the start timing of the radio frame to the preset timing, based on the start timing of the radio frame in the adjacent base station and the frame offset of the adjacent base station. This makes it possible to adjust the start timing of the radio frame of the base station to the preset appropriate timing, which contributes to solve the problem described above.

### <Another Example Embodiment>

In Fig. 5, as the example of the method of notifying the frame offset information between the base stations via the backhaul, the example has been described that uses, via 5GC, the UPLINK RAN CONFIGURATION TRANSFER message and the DOWNLINK RAN CONFIGURATION TRANSFER message of the NGAP protocol defined in Non Patent Literature 8 (3GPP TS38. 413). However, the protocol message of the NGAP protocol is not limited to these messages, and other protocol messages may be used.

Further, the message requesting the frame offset information may be any message indicating a request of the frame offset information. In addition, the message notifying the frame offset information may include information indicating the frame offset information.

Further, the message requesting the frame offset information may be any message to be transmitted by the base station that request the frame offset information when another base station is detected using network listening. Similarly, the message notifying the frame offset information may be a message to be transmitted by the base station when the message requesting the frame offset information is received.

Further, the frame offset information may be directly acquired between the base stations using a protocol message of an XnAP protocol defined in Non Patent Literature 9 (3GPP TS38. 423).

There is a case where a base station supporting the NR system synchronizes with a base station supporting the LTE system using network listening. Further, there is a case where a base station supporting the LTE system synchronizes with a base station supporting the NR system using network listening. In addition, there is a case where a base station supporting the LTE system synchronizes with a base station supporting the LTE system using network listening. Further, there is a case where a base station of different radio access technology (RAT) synchronizes with a base station of W-CDMA, CDMA, and GSM using network listening. As described above, in the case of performing the synchronization between different RATs using network listening, the frame offset information may be transferred by an interface between different RATs, an interface between 5GC and 5GC, an interface between EPC and EPC, an interface between EPC and 5GC (S10 interface or N14 interface), an interface between different PLMNs, an S1 interface, or an X2 interface.

Here, a transfer method of transferring the frame offset information in the case of performing synchronization between different RATs using network listening will be supplemented.

For example, when the base station supporting the NR system synchronizes with the base station supporting the LTE system using network listening, the base station of the NR system needs to inquire the base station of the LTE system of the frame offset information via 5GC and EPC.

The synchronization destination base station of the NR system sets RIM Information to request the frame offset information of the base station of the LTE system and transmits an UPLINK RIM INFORMATION TRANSFER message of an NGAP protocol to 5GC. A Global RAN Node ID and a TAI are set in a Target RAN ID of an UPLINK RIM INFORMATION TRANSFER message. An eNB ID and a cell ID of the synchronization destination base station of the LTE system are set in the Global RAN Node ID. The 5GC confirms the TAI, and performs routing of the message on the EPC bases on TAI information. The EPC confirms the Target RAN ID, specifies a base station (eNB) of the LTE system which is a routing destination, and transmits an MME DIRECT INFORMATION TRANSFER message. The base station of the LTE system receiving the MME DIRECT INFORMATION TRANSFER message confirms that the frame offset information from 1 PPS is requested by the RIM Information, and sets the frame offset information in RIM Information of an ENB DIRECT INFORMATION TRANSFER message. The EPC specifies the 5GC based on the TAI information of the transmission destination of the ENB DIRECT INFORMATION TRANSFER message, and performs routing of the message. The 5GC specifies the base station of the NR system by the Global RAN Node ID of the message transmission destination, and performs routing of the DOWNLINK RIM INFORMATION TRANSFER message on the synchronization destination base station of the NR system. Thus, the synchronization destination base station of the NR system can acquire the frame offset information of the base station of the LTE system.

Even when the base station of the LTE system synchronizes with the base station of the NR system using network listening, it is possible to acquire the frame offset information of the base station of the NR system as described above. Further, even when the base station of the LTE system synchronizes with the base station of the NR system using network listening or when the base station of the NR system synchronizes with the base station of different RATs such as W-CDMA, CDMA, and GSM using network listening, it is possible to acquire the frame offset information of the adjacent base station, which is the synchronization source, via the core network by the routing system as described above.

Even when the base station is divided into CU, DU, and RU, the frame offset information may be transferred using any combination of interfaces, for example, CU-CU, CU-DU, DU-RU, DU-DU, or RU-RU.

In addition, the frame offset information may be notified wirelessly between the base stations. As a method of acquiring wirelessly the frame offset information, the frame offset information may be notified to the base station from the adjacent base station by broadcast information due to the RRC protocol, or the frame offset information may be notified by a lower layer protocol such as MAC or PHY. Further, the frame offset information may be notified via a maintenance monitoring device (O&M device) of each of the base station and the adjacent base station.

In the example of Fig. 5, the base station requests the frame offset information from the adjacent base station, and the adjacent base station notifies the base station of the frame offset information as a response to the request, but the present invention is not limited thereto. For example, the frame offset information of the synchronization source base station may be updated for some reasons in a situation where the synchronization has already been performed using network listening. When the frame offset information in the synchronization source base station is updated, the difference in frame offset between the synchronization source base station and the synchronization destination base station (equivalent to offset 3 in Fig. 7) also changes. Therefore, when the frame offset information of the synchronization source base station is updated, the updated frame offset information of the synchronization source base station may be notified to the synchronization destination base station from the synchronization source base station in a wireless manner or via a backhaul.

In the example embodiment described above, the method has been mainly described in which the TDD base station performs phase synchronization with the FDD adjacent base station using network listening. However, when the FDD base station performs phase synchronization with the FDD or TDD adjacent base station using network listening, the frame offset information of the adjacent base station may be required. For example, the FDD base station may need to cause the start timing of the radio frame to synchronize with that of the adjacent base station for the purpose of eMBMS (evolved Multimedia Broadcast Multicast), CoMP (Coordinated Multi-Point), or eICIC (Enhanced ICIC). In this case, the FDD base station performing eMBMS, CoMP, or eICIC inquires of the FDD or TDD adjacent base station about the frame offset information, and acquires the frame offset information from the adjacent base station. Thus, the FDD base station can cause the start timing of the radio frame to synchronize with that of the FDD or TDD adjacent base station.

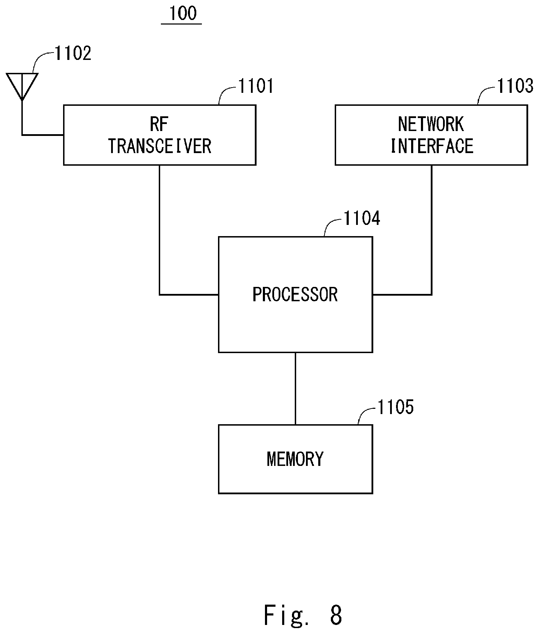

Subsequently, a description will be given with respect to a hardware configuration example of the base station 100 described in the above-described example embodiment. Fig. 8 is a block diagram showing a hardware configuration example of the base station 100.

As shown in Fig. 8, the base station 100 includes an RF (Radio Frequency) transceiver 1101, a network interface 1103, a processor 1104, and a memory 1105. For example, the transmission/reception unit 1001 shown in Fig. 4 is realized by the RF transceiver 1101 and the network interface 1103. The processing unit 1002 shown in Fig. 4 is realized by the processor 1104. The storage unit 1003 shown in Fig. 4 is realized by the memory 1105. The receiver 1004 for network listening shown in Fig. 4 is realized by the RF transceiver 1101.

The RF transceiver 1101 performs analog RF signal processing to communicate with the UEs 401 and 402 and to perform network listening. The RF transceiver 1101 may include a plurality of transceivers. The RF transceiver 1101 is couped to the antenna 1102 and the processor 1104. The RF transceiver 1101 receives modulated symbol data (or OFDM symbol data) from the processor 1104, generates a transmission RF signal, and supplies the generated transmission RF signal to the antenna 1102. Further, the RF transceiver 1101 generates a baseband reception signal based on a reception RF signal received by the antenna 1102 and supplies this signal to the processor 1104.

The network interface 1103 is used to communicate with a network node (for example, another core network node). The network interface 1103 may include, for example, a network interface card (NIC) conforming to the IEEE 802.3 series.

The processor 1104 performs U-plane processing and C-plane processing including digital baseband signal processing for radio communication. For example, in the case of LTE or 5G, the digital baseband signal processing performed by the processor 1104 may include signal processing of MAC layer and PHY layer.

The processor 1104 may include a plurality of processors. The processor 1104 may include, for example, a modem-processor (for example, DSP) that performs the digital baseband signal processing, and a protocol-stack-processor (for example, CPU or MPU) that performs C-plane processing.

The memory 1105 is configured by a combination of a volatile memory and a nonvolatile memory. The memory 1105 may include a plurality of physically independent memory devices. The volatile memory is, for example, a static random access memory (SRAM), a dynamic RAM (DRAM), or a combination thereof. The nonvolatile memory is, for example, a mask read only memory (MROM), an electrically erasable programmable ROM (EEPROM), a flash memory, a hard disk drive, or a combination thereof. The memory 1105 may include a storage located apart from the processor 1104. In this case, the processor 1104 may access the memory 1105 through the network interface 1103 or an I/O interface (not shown).

The memory 1105 may store software modules (computer programs) including instructions and data to perform processing performed by the base station 100 described in the above-described example embodiments. In some implementations, the processor 1104 may be configured to read and execute the software modules from the memory 1105, thereby performing the processing of the base station 100 described in the above-described example embodiments.

In the above example, these programs may be stored in various types of non-transitory computer readable media and thereby supplied to computers. The non-transitory computer readable media includes various types of tangible storage media. Examples of the non-transitory computer readable media include a magnetic recording medium, a magneto-optic recording medium (such as a magneto-optic disk), a CD-ROM (Read Only Memory), a CD-R, a CD-R/W, a semiconductor memory, and a flash ROM, RAM (Random Access Memory). Examples of the magnetic recording medium may include a flexible disk, a magnetic tape, and a hard disk drive. Examples of the semiconductor memory may include a mask ROM, a PROM (Programmable ROM), an EPROM (Erasable PROM), a flash ROM, and a RAM (Random Access Memory). These programs may be supplied to computers using various types of transitory computer readable media. Examples of the transitory computer readable media include an electrical signal, an optical signal, and an electromagnetic wave. The transitory computer readable media can supply programs to a computer through a wired communication line, for example, electric wires and optical fibers, or a wireless communication line.

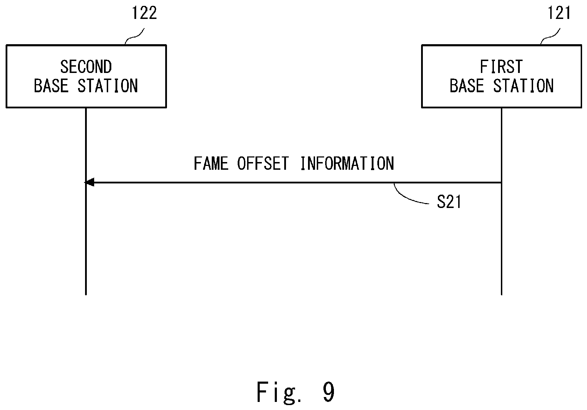

Here, an example of processing of the base station 100 executed by the processor 1104 will be described. Fig. 9 is a sequence diagram showing an example of processing of the base station 100 executed by the processor 1104. In Fig. 9, a first base station 121 is a base station which is a synchronization destination for network listening, and a second base station 122 is a base station which is a synchronization source for network listening.

As shown in Fig. 9, for example, the processor 1104 provided in the first base station 121 is configured to notify the second base station 122 adjacent to the first base station 121 of the frame offset information indicating the frame offset equivalent to the difference between the start timing of the radio frame in the first base station 121 and PPS in the wireless manner or via the backhaul in step S21.

Further, the processor 1104 provided in the second base station 122 is configured to acquire the frame offset information indicating the frame offset equivalent to the difference between the start timing of the radio frame in the first base station 121 and PPS in the wireless manner or via the backhaul from the first base station 121 adjacent to the second base station 122 in step S21.

Although the present disclosure has been described above with reference to the example embodiments, the present disclosure is not limited to the above-described example embodiments. The configurations and details of the present disclosure can be variously changed within the scope of the present disclosure to be capable of being understood by those skilled in the art.

For example, some or all of the above-described example embodiments may also be described as Supplementary notes to be described below, but are not limited thereto.

### (Supplementary note 1)

A base station as a first base station, comprising:
at least one memory; and
at least one processor coupled to the at least one memory,
wherein the at least one processor is configured to notify a second base station of frame offset information indicating a frame offset equivalent to a first difference between a start timing of a radio frame in the first base station and PPS (Pulse Per Second) in a wireless manner or via a backhaul.

### (Supplementary note 2)

The base station according to Supplementary note 1,
wherein the at least one processor is configured to:
receive a request of the frame offset information of the first base station from the second base station in a wireless manner or via a backhaul, and
notify the second base station of the frame offset information in the first base station in a wireless manner or via a backhaul in response to the request.

### (Supplementary note 3)

A base station as a second base station, comprising:
at least one memory; and
at least one processor coupled to the at least one memory,
wherein the at least one processor is configured to acquire, from a first base station, frame offset information indicating a frame offset equivalent to a first difference between a start timing of a radio frame in the first base station and PPS (Pulse Per Second) in a wireless manner or via a backhaul.

### (Supplementary note 4)

The base station according to Supplementary note 3,
wherein the at least one processor is configured to:
detect the first base station using network listening,
request the frame offset information in the first base station in a wireless manner or via a backhaul, from the first base station, and
receive, from the first base station, the frame offset information in the first base station in a wireless manner or via a backhaul in response to the request.

### (Supplementary note 5)

The base station according to Supplementary note 3 or 4,
wherein the at least one processor is configured to adjust a start timing of a radio frame in the second base station based on the frame offset information of the first base station in a case of synchronizing with the first base station using network listening.

### (Supplementary note 6)

The base station according to Supplementary note 5,
wherein the at least one processor is configured to obtain a second difference between the frame offset in the first base station and the frame offset in the second base station based on the frame offset information in the first base station in the case of synchronizing with the first base station using the network listening, and to adjust the start timing of the radio frame in the second base station based on the second difference.

### (Supplementary note 7)

The base station according to Supplementary note 6,
wherein the at least one processor is configured to cause the start timing of the radio frame in the second base station to synchronize with the start timing of the radio frame in the first base station in the case of synchronizing with the first base station using the network listening, and then to cause the start timing of the radio frame in the second base station to be shifted by the second difference.

### (Supplementary note 8)

A communication system comprising:
a first base station; and
a second base station,
wherein the first base station is configured to notify a second base station of frame offset information indicating a frame offset equivalent to a first difference between a start timing of a radio frame in the first base station and PPS (Pulse Per Second) in a wireless manner or via a backhaul.

### (Supplementary note 9)

The communication system according to Supplementary note 8, wherein
the second base station is configured to:
detect the first base station using network listening, and
request the frame offset information in the first base station in a wireless manner or via a backhaul, from the first base station, and
the first base station is configured to notify the second base station of the frame offset information in the first base station in a wireless manner or via a backhaul in response to the request.

### (Supplementary note 10)

The communication system according to Supplementary note 8 or 9,
wherein the second base station is configured to adjust a start timing of a radio frame in the second base station based on the frame offset information in the first base station in a case of synchronizing with the first base station using network listening.

### (Supplementary note 11)

The communication system according to Supplementary note 10,
wherein the second base station is configured to obtain a second difference between the frame offset in the first base station and the frame offset in the second base station based on the frame offset information in the first base station in the case of synchronizing with the first base station using the network listening, and to adjust the start timing of the radio frame in the second base station based on the second difference.

### (Supplementary note 12)

The communication system according to Supplementary note 11,
wherein the second base station is configured to cause the start timing of the radio frame in the second base station to synchronize with the start timing of the radio frame in the first base station in the case of synchronizing with the first base station using the network listening, and then to cause the start timing of the radio frame in the second base station to be shifted by the second difference.

### (Supplementary note 13)

A communication method performed by a base station as a first base station, the method comprising:
a step of notifying a second base station of frame offset information indicating a frame offset equivalent to a first difference between a start timing of a radio frame in the first base station and PPS (Pulse Per Second) in a wireless manner or via a backhaul.

### (Supplementary note 14)

A communication method performed by a base station as a second base station, the method comprising:
a step of acquiring, from a first base station, frame offset information indicating a frame offset equivalent to a first difference between a start timing of a radio frame in the first base station and PPS (Pulse Per Second) in a wireless manner or via a backhaul.

### (Supplementary note 15)

A non-transitory computer-readable medium for storing a program that causes a computer to perform a communication method for a base station as a first base station,
the communication method including a step of notifying a second base station of frame offset information indicating a frame offset equivalent to a first difference between a start timing of a radio frame in the first base station and PPS (Pulse Per Second) in a wireless manner or via a backhaul.

### (Supplementary note 16)

A non-transitory computer-readable medium for storing a program that causes a computer to perform a communication method for a base station as a second base station,
the communication method including a step of acquiring, from a first base station, frame offset information indicating a frame offset equivalent to a first difference between a start timing of a radio frame in the first base station and PPS (Pulse Per Second) in a wireless manner or via a backhaul.

This application is based upon and claims the benefit of priority from Japanese Patent Application No. 2020-060941, filed on March 30, 2020, the entire contents of which are incorporated herein by reference.

### Reference Signs List

100 to 105: BASE STATION
111, 112: eNB
113: ng-eNB
114, 115, 116: gNB
121: FIRST BASE STATION
122: SECOND BASE STATION
201: EPC
301, 302: 5GC
401, 402: UE
1001: TRANSMISSION/RECEPTION UNIT
1002: PROCESSING UNIT
1003: STORAGE UNIT
1004: RECEIVER FOR NETWORK LISTENING
1101: RF TRANSCEIVER
1102: ANTENNA
1103: NETWORK INTERFACE
1104: PROCESSOR
1105: MEMORY

## Claims

1. A base station as a first base station, comprising:
at least one memory; and
at least one processor coupled to the at least one memory,
wherein the at least one processor is configured to notify a second base station of frame offset information indicating a frame offset equivalent to a first difference between a start timing of a radio frame in the first base station and PPS (Pulse Per Second) in a wireless manner or via a backhaul.

2. The base station according to Claim 1,
wherein the at least one processor is configured to:
receive a request of the frame offset information of the first base station from the second base station in a wireless manner or via a backhaul, and
notify the second base station of the frame offset information in the first base station in a wireless manner or via a backhaul in response to the request.

3. A base station as a second base station, comprising:
at least one memory; and
at least one processor coupled to the at least one memory,
wherein the at least one processor is configured to acquire, from a first base station, frame offset information indicating a frame offset equivalent to a first difference between a start timing of a radio frame in the first base station and PPS (Pulse Per Second) in a wireless manner or via a backhaul.

4. The base station according to Claim 3,
wherein the at least one processor is configured to:
detect the first base station using network listening,
request the frame offset information in the first base station in a wireless manner or via a backhaul, from the first base station, and
receive, from the first base station, the frame offset information in the first base station in a wireless manner or via a backhaul in response to the request.

5. The base station according to Claim 3 or 4,
wherein the at least one processor is configured to adjust a start timing of a radio frame in the second base station based on the frame offset information of the first base station in a case of synchronizing with the first base station using network listening.

6. The base station according to Claim 5,
wherein the at least one processor is configured to obtain a second difference between the frame offset in the first base station and the frame offset in the second base station based on the frame offset information in the first base station in the case of synchronizing with the first base station using the network listening, and to adjust the start timing of the radio frame in the second base station based on the second difference.

7. The base station according to Claim 6,
wherein the at least one processor is configured to cause the start timing of the radio frame in the second base station to synchronize with the start timing of the radio frame in the first base station in the case of synchronizing with the first base station using the network listening, and then to cause the start timing of the radio frame in the second base station to be shifted by the second difference.

8. A communication system comprising:
a first base station; and
a second base station,
wherein the first base station is configured to notify a second base station of frame offset information indicating a frame offset equivalent to a first difference between a start timing of a radio frame in the first base station and PPS (Pulse Per Second) in a wireless manner or via a backhaul.

9. The communication system according to Claim 8, wherein
the second base station is configured to:
detect the first base station using network listening, and
request the frame offset information in the first base station in a wireless manner or via a backhaul, from the first base station, and
the first base station is configured to notify the second base station of the frame offset information in the first base station in a wireless manner or via a backhaul in response to the request.

10. The communication system according to Claim 8 or 9,
wherein the second base station is configured to adjust a start timing of a radio frame in the second base station based on the frame offset information in the first base station in a case of synchronizing with the first base station using network listening.

11. The communication system according to Claim 10,
wherein the second base station is configured to obtain a second difference between the frame offset in the first base station and the frame offset in the second base station based on the frame offset information in the first base station in the case of synchronizing with the first base station using the network listening, and to adjust the start timing of the radio frame in the second base station based on the second difference.

12. The communication system according to Claim 11,
wherein the second base station is configured to cause the start timing of the radio frame in the second base station to synchronize with the start timing of the radio frame in the first base station in the case of synchronizing with the first base station using the network listening, and then to cause the start timing of the radio frame in the second base station to be shifted by the second difference.

13. A communication method performed by a base station as a first base station, the method comprising:
a step of notifying a second base station of frame offset information indicating a frame offset equivalent to a first difference between a start timing of a radio frame in the first base station and PPS (Pulse Per Second) in a wireless manner or via a backhaul.

14. A communication method performed by a base station as a second base station, the method comprising:
a step of acquiring, from a first base station, frame offset information indicating a frame offset equivalent to a first difference between a start timing of a radio frame in the first base station and PPS (Pulse Per Second) in a wireless manner or via a backhaul.

15. A non-transitory computer-readable medium for storing a program that causes a computer to perform a communication method for a base station as a first base station,
the communication method including a step of notifying a second base station of frame offset information indicating a frame offset equivalent to a first difference between a start timing of a radio frame in the first base station and PPS (Pulse Per Second) in a wireless manner or via a backhaul.

16. A non-transitory computer-readable medium for storing a program that causes a computer to perform a communication method for a base station as a second base station,
the communication method including a step of acquiring, from a first base station, frame offset information indicating a frame offset equivalent to a first difference between a start timing of a radio frame in the first base station and PPS (Pulse Per Second) in a wireless manner or via a backhaul.
